# EUROPÄISCHE PATENTANMELDUNG

(11) **EP 3 184 912 A2**
(43) Veröffentlichungstag der Anmeldung: **28.06.2017**
(21) Anmeldenummer: 17000593.8
(22) Anmeldetag: 07.04.2017
(51) Int. Cl.: F24C 15/16

(54) **GARAUFLAGEVORRICHTUNG ZUR ZUBEREITUNG EINES GARGUTS**

(71) Anmelder: V-Zug AG, 6301 Zug (CH)
(72) Erfinder: Degelo, Thomas, 8908 Hedingen (CH); Thürlemann, Samuel, 6300 Zug (CH); von Freeden, Martin, 8700 Küsnacht (CH)
(74) Vertreter: Sutter, Kurt

(57) **Zusammenfassung**

Eine Garauflagevorrichtung, insbesondere zur Anordnung auf einem Kochfeld oder in einem Gargerät, umfasst eine Garplatte (2) und mindestens zwei an gegenüberliegenden Seiten der Garplatte (2) angeordnete Haltevorrichtungen (1). Die Haltevorrichtungen (1) sind von der Garplatte (2) trennbar. Im Weiteren kann die Garplatte (2) mittels eines Hebemechanismus im Verhältnis zur Haltevorrichtung (1) angehoben und abgesenkt werden.

## Beschreibung

### Gebiet der Erfindung

Die Erfindung betrifft eine Garauflagevorrichtung, insbesondere zur Anordnung auf einem Kochfeld oder in einem Gargerät, welche eine Garplatte umfasst.

### Hintergrund

Teppanyaki Garplatten können genutzt werden, um die Vorteile eines konventionellen Teppanyaki Grills auf einem Kochfeld zu geniessen. Die Garplatte kann im Gegensatz zu einem fest eingebauten Teppanyaki Grill in einer Schublade verstaut werden, wenn diese nicht benötigt wird. Je nach Ausführung des Kochfeldes erkennt dieses die Teppanyaki Garplatte und schaltet in einen speziellen Teppanyaki Modus um, wenn die Garplatte auf das Kochfeld gelegt wird.

### Darstellung der Erfindung

Es ist Aufgabe der Erfindung, die Handhabbarkeit bekannter Garauflagevorrichtungen zu verbessern.

Diese Aufgabe wird von der Garauflagevorrichtung gemäss dem unabhängigen Vorrichtungsanspruch erfüllt. Demgemäss umfasst die Garauflagevorrichtung, welche insbesondere zur Anordnung auf einem Kochfeld oder in einem Gargerät geeignet ist, eine Garplatte. Die Garauflagevorrichtung weist mindestens zwei an gegenüberliegenden Seiten der Garplatte angeordnete Haltevorrichtungen auf, wobei die mindestens zwei Haltevorrichtungen von der Garplatte trennbar sind.

Durch die Trennbarkeit der Garplatte von den mindestens zwei Haltevorrichtungen kann die Garauflagevorrichtung in unterschiedlichen Geräten genutzt werden. Beispielsweise kann die Garplatte getrennt von den mindestens zwei Haltevorrichtungen in einen Backofen oder in ein Dampfgargerät eingeschoben werden, um Gargüter vorzuwärmen oder fertig zu garen. Die Garplatte kann für sich alleine auch in einen Geschirrspüler zur Reinigung oder in einen Kühlschrank zum Kühlen des Garguts eingelegt werden. Die Garplatte in Kombination mit den mindestens zwei Haltevorrichtungen kann zur Benutzung auf einem Kochfeld oder zum Servieren auf einem Tisch verwendet werden, wobei mittels den Haltevorrichtungen die Garplatte in einfacher Weise auf dem Kochfeld positioniert und von diesem auch wieder entfernt werden kann.

In einer besonderen Ausführungsform weisen die mindestens zwei Haltevorrichtungen eine Wärmeleitfähigkeit von weniger als 1 W/(m K), insbesondere weniger als 0.5 W/(m K), insbesondere weniger als 0.1 W/(m K), auf.

Durch die isolierende Wirkung der Haltevorrichtungen kann die Garauflagevorrichtung auf dem Kochfeld an den Haltevorrichtungen mit den Händen festgehalten werden, weil die vom Kochfeld auf die Garplatte übertragene oder in der Garplatte induzierte Wärme nicht auf die Haltevorrichtungen übertragen wird. Im Weiteren kann beim Servieren auf dem Tisch die Garauflagevorrichtung lediglich mittels den Haltevorrichtungen auf dem Tisch abgestützt werden, sodass der Tisch nicht mit einer zu heissen Fläche der Garauflagevorrichtung in Kontakt kommt.

Mit Vorteil besteht die Garplatte zumindest teilweise aus Edelstahl und/oder die mindestens zwei Haltevorrichtungen bestehen zumindest teilweise, insbesondere mehrheitlich, aus Holz. Unter dem Begriff "mehrheitlich" sind mehr als 50 Volumenprozent zu verstehen.

Während Edelstahl als geeignete Garfläche dient, bildet Holz einen guten Isolator für die Haltevorrichtungen.

Insbesondere weist die Garplatte eine Grundfläche auf, deren Höhe nicht mehr als 1/10 des grössten Durchmessers der Grundfläche beträgt.

Im Weiteren kann bzw. können die Garauflagevorrichtung und/oder die Garplatte rechteckig ausgestaltet sein. Unter "rechteckig" fallen Ausführungsformen, welche im Wesentlichen rechteckig sind, beispielsweise Rechteckformen mit abgerundeten Ecken, insbesondere wobei der Eckradius wesentlich kleiner ist, als der grösste Durchmesser der Garauflagevorrichtung, insbesondere mindestens fünfmal kleiner, insbesondere mindestens zehnmal kleiner.

Durch die Rechteckform lassen sich die Garauflagevorrichtung und/oder die Garplatte besonders einfach auf dem Kochfeld positionieren, oder in ein Gargerät oder in einen Kühlschrank einschieben.

In einer besonderen Ausführungsform erstrecken sich die mindestens zwei Haltevorrichtungen über die gesamte Länge der gegenüberliegenden Seiten der Garplatte und/oder an einer Unterseite der mindestens zwei Haltevorrichtungen ist zumindest teilweise ein Rutschschutz, insbesondere Rutschschutzmatten, insbesondere Silikonmatten, angeordnet.

Die grosse Länge der Haltevorrichtungen verleiht der Garauflagevorrichtung erhöhte Stabilität und bildet eine grosse Fläche, um einen Rutschschutz anzuordnen.

Mit Vorteil können die mindestens zwei Haltevorrichtungen mittels mindestens einem Verbindungselement miteinander verbunden sein. Die Garplatte ist dabei von den mindestens zwei Haltevorrichtungen und vom Verbindungselement trennbar.

Insbesondere sind die mindestens zwei Haltevorrichtungen und das mindestens eine Verbindungselement Bestandteil eines die Garplatte umfassenden Halterahmens, wobei die Garplatte vom Halterahmen trennbar ist. Insbesondere besteht das mindestens eine Verbindungselement teilweise aus demselben Material wie die Garplatte.

Durch die Verbindung der mindestens zwei Haltevorrichtungen oder durch die Ausgestaltung als Halterahmen weist die Garauflagevorrichtung eine erhöhte Stabilität auf und ermöglicht dem Benutzer eine einfache Handhabe, weil die Garplatte lediglich auf den Halterahmen gelegt werden muss.

Im Weiteren ist an der Unterseite des Halterahmens zumindest teilweise ein Rutschschutz, insbesondere Rutschschutzmatten, insbesondere Silikonmatten, angeordnet. Dies ermöglicht, dass der Benutzer die Garauflagevorrichtung beispielsweise während des Garens auf dem Kochfeld nicht festhalten muss, weil der Rutschschutz die Garauflagevorrichtung auf dem Kochfeld in Position hält. Insbesondere wenn der Halterahmen gering wärmeleitend ist, ist die Anordnung des Rutschschutzes möglich, weil die Haltevorrichtung bzw. der Halterahmen von der Garplatte thermisch isoliert ist und deshalb nicht zu heiss wird.

In einer besonderen Ausführungsform weist die Garauflagevorrichtung einen Hebemechanismus auf, der insbesondere an den mindestens zwei Haltevorrichtungen angeordnet ist,
- wobei mittels des Hebemechanismus die Garplatte gegenüber den Haltevorrichtungen, insbesondere um mindestens 0.5 cm, insbesondere um mindestens 1 cm, anhebbar ist, und/oder
- wobei der Hebemechanismus derart ausgestaltet ist, dass in einer ersten Hebestufe eine Unterseite der Garplatte auf gleicher oder tieferer Höhe angeordnet ist wie eine Unterseite der Haltevorrichtung und in einer zweiten Hebestufe die Unterseite der Garplatte oberhalb der Unterseite der Haltevorrichtung angeordnet ist.

Der Hebemechanismus ermöglicht, dass in einer ersten Hebestufe die Unterseite der Garplatte der unterste Punkt der Garauflagevorrichtung bildet und deshalb beispielsweise beim Garen auf dem Kochfeld eine gute Wärmeübertragung auf die Garplatte möglich ist. Andererseits kann die Garauflagevorrichtung beispielsweise für das Servieren auf dem Tisch in die zweite Hebestufe bewegt werden, sodass die Garplatte durch die mindestens zwei Haltevorrichtungen in der Höhe gehalten wird und die heisse Unterseite der Garplatte mit der Tischfläche nicht in Kontakt kommt. Bei der zweiten Hebestufe sind lediglich die Unterseiten der mindestens zwei Haltevorrichtungen in Kontakt mit der Tischfläche und stützen die Garauflagevorrichtung so auf dem Tisch ab.

In einer besonderen Ausführungsform ist in der zweiten Hebestufe die Oberseite der Garplatte höchstens auf gleicher Höhe wie eine Oberseite der Haltevorrichtung angeordnet.

Im Weiteren kann der Hebemechanismus eine Schiebevorrichtung aufweisen, welche derart ausgestaltet ist, dass mittels horizontaler Verschiebung der Schiebevorrichtung die Garplatte gegenüber den Haltevorrichtungen anhebbar ist und/oder zwischen der ersten Hebestufe und der zweiten Hebestufe bewegbar ist. Insbesondere ist die Schiebevorrichtung in ihrer Schiebebewegung von mindestens zwei Haltevorrichtungen geführt.

Das Anheben der Garplatte mittels der horizontalen Schiebevorrichtung ermöglicht für den Benutzer ein einfaches hin- und her Bewegen zwischen der ersten und der zweiten Hebestufe.

In einer besonderen Ausführungsform sind die Garplatte und die Schiebevorrichtung derart angeordnet und ausgestaltet, dass zum Anheben der Garplatte im Verhältnis zu der mindestens einen Haltevorrichtung die Schiebevorrichtung horizontal gegen eine Schrägfläche der Garplatte schiebbar ist.

"Schräg" bedeutet, dass die Schrägfläche weder horizontal noch vertikal angeordnet ist. Durch das Drücken der Schiebevorrichtung gegen die Schrägfläche erfolgt die Bewegungsumlenkung der horizontal bewegbaren Schiebevorrichtung auf die vertikal bewegbare Garplatte.

Im Weiteren kann die Schiebevorrichtung einen Haken zur Ergreifung der Schiebevorrichtung aufweisen.

Mit Vorteil weist die mindestens eine der mindestens zwei Haltevorrichtungen eine Ausnehmung auf, derart, dass der Benutzer die Haltevorrichtung in die Ausnehmung hinein untergreifen kann. Insbesondere ist die Ausnehmung von einer U-Form der Haltevorrichtung umfasst.

Im Weiteren kann die Schiebevorrichtung derart angeordnet sein, dass der Benutzer sie bei Untergreifen der Haltevorrichtung betätigen kann.

Die Kombination der Haltevorrichtung mit der Betätigung der Schiebevorrichtung ermöglicht dem Benutzer die Garauflagevorrichtung zu greifen bzw. zu tragen und gleichzeitig die Garplatte in der Höhe im Verhältnis zur Haltevorrichtung zu verschieben.

In einer besonderen Ausführungsform ist die Garplatte von unten durch die mindestens zwei Haltevorrichtungen abgestützt und nach oben von den mindestens zwei Haltevorrichtungen, insbesondere ohne Werkzeug, aus den Haltevorrichtungen entnehmbar.

Im Weiteren kann die Garplatte mit Vorteil eine Länge zwischen 33 cm und 53 cm, insbesondere 43 cm, und/oder eine Breite zwischen 20 cm und 36 cm, insbesondere 28 cm, aufweisen.

Mit Vorteil weist die Garplatte einen erhöhten Rand auf, welcher die Garplatte umgibt.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Garauflagevorrichtung, wobei die Garplatte auf der Haltevorrichtung bzw. auf dem Halterahmen positioniert ist,
Fig. 2 eine Garauflagevorrichtung, wobei die Haltevorrichtung bzw. der Halterahmen und die Garplatte voneinander getrennt sind,
Fig. 3 einen Schnitt durch eine Garauflagevorrichtung, wobei die Garplatte im Verhältnis zur Haltevorrichtung auf der ersten Hebestufe angeordnet ist, und
Fig. 4 einen Schnitt durch eine Garauflagevorrichtung, wobei die Garplatte im Verhältnis zur Haltevorrichtung auf der zweiten Hebestufe angeordnet ist.

### Weg zur Ausführung der Erfindung

Im Folgenden werden die Begriffe "oben", "unten", "Oberseite", "Unterseite" etc. verwendet. Diese Begriffe beziehen sich auf eine Garauflagevorrichtung, wie sie verwendungsgemäss beispielsweise auf einem Kochfeld positioniert wird. D.h. die Oberseite der Garplatte ist diejenige Seite, auf welche das Gargut angeordnet wird, um das Gargut zu garen.

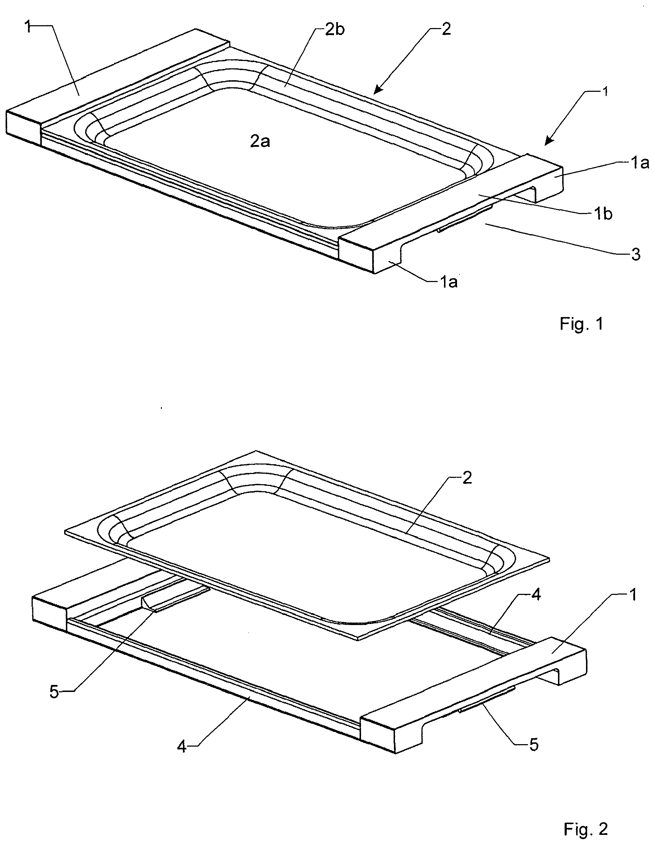

In Fig. 1 wird eine Garauflagevorrichtung gezeigt, welche zwei Haltevorrichtungen 1 und eine Garplatte 2 aufweist. Die Garplatte 2 weist eine Grundfläche 2a, auf welcher das Gargut gegart werden kann, und einen Rand 2b, welcher die Garplatte 2 umgibt, auf. Die zwei Haltevorrichtungen 1 sind an zwei gegenüberliegenden Seiten der rechteckig ausgestalteten Garplatte 2 angeordnet und erstrecken sich über die gesamte Seitenlänge der Garplatte 2. Die Haltevorrichtungen 1 bestehen mindestens teilweise aus Holz oder Kunststoff, sodass die von einem Kochfeld auf die Garplatte 2 übertragene oder in der Garplatte 2 induzierte Wärme nur in geringem Masse auf die Haltevorrichtungen 2 übertragen wird. Der Benutzer kann somit auch unmittelbar nach oder während des Garvorgangs die Garauflagevorrichtung an den Haltevorrichtungen 1 greifen und transportieren, ohne dass er sich die Hände verbrennt. Die Garplatte 2 besteht an ihrer Oberseite aus Edelstahl. Ebenso könnte die Oberfläche mit einer Antihaftbeschichtung oder mit einer kratzfesten Beschichtung versehen sein.

Die Haltevorrichtungen 1 weisen eine Ausnehmung 3 auf. Diese ermöglicht, dass die Haltevorrichtung 1 von aussen untergriffen werden kann, um die Garauflagevorrichtung mit Händen zu tragen. Die Hand greift somit in die Ausnehmung 3 hinein.

Die Ausnehmung 3 ist derart in der Haltevorrichtung 1 angeordnet, dass die Haltevorrichtung 1 eine U-Form aufweist, mit zwei Schenkeln 1a und einer Grundseite 1b, welche an der Oberseite der Haltevorrichtung 1 angeordnet ist.

Die Schenkel 1a dienen als Stützelemente, um die Garauflagevorrichtung beispielsweise auf einem Kochfeld oder auf einem Tisch abzustützen.

In Fig. 2 ist dargestellt, wie die Garplatte 2 von den Haltevorrichtungen 1 getrennt werden kann.

In der vorliegenden Ausführungsform werden die Haltevorrichtungen 1 von zwei Verbindungselementen 4 zusammengehalten. Die zwei Haltevorrichtungen 1 und die zwei Verbindungselemente 4 bilden zusammen einen Halterahmen, auf welchem die Garplatte 2 abgestützt werden kann.

Die Verbindungselemente 4 bestehen zumindest teilweise aus demselben Material wie die Haltevorrichtung 1 und/oder zumindest teilweise aus demselben Material wie die Garplatte 2.

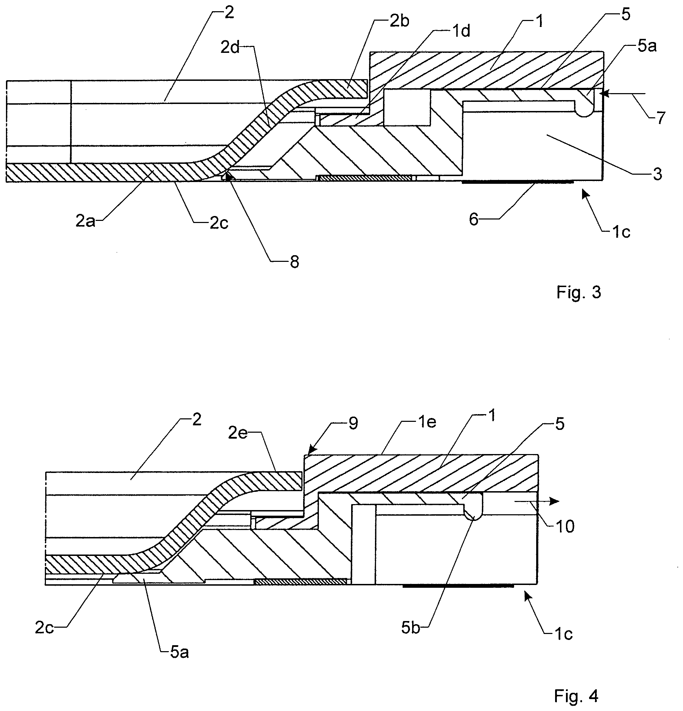

Im Weiteren ist an jeder Haltevorrichtung 1 eine Schiebevorrichtung 5 angeordnet, mit welcher die Garplatte 2 im Verhältnis zu den Haltevorrichtungen 1 bzw. zum Halterahmen angehoben bzw. abgesenkt werden kann. Dieser Hebemechanismus mit den entsprechenden Schiebevorrichtungen 5 wird anhand der Figuren 3 und 4 näher erläutert.

Fig. 3 zeigt einen Schnitt durch die Garauflagevorrichtung, wobei die Garplatte 2 im Verhältnis zur Haltevorrichtung 1 auf der ersten Hebestufe angeordnet ist. Die erste Hebestufe ist beispielsweise geeignet, um die Garauflagevorrichtung auf einem Kochfeld zu positionieren und das Gargut auf der Garplatte 2 zu garen. Die Unterseite 2c der Garplatte 2 ist dabei in Berührung mit dem Kochfeld und befindet sich in der gleichen Ebene wie die Unterseite 1c der Haltevorrichtung 1.

An der Unterseite 1c der Haltevorrichtung 1 sind Rutschschutzmatten 6 angeordnet, sodass bei der Zubereitung des Garguts auf der Garplatte 2 die Garauflagevorrichtung sich nicht verschiebt.

Die Haltevorrichtung 1 weist einen Absatz 1d auf, auf welchem die Garplatte 2 mittels des Randes 2b abgestützt werden kann. In der vorliegenden Ausführungsform ist dies der Fall, wenn die Garplatte 2 nicht von unten, beispielsweise vom Kochfeld oder von einem Tisch abgestützt wird, sondern an den Haltevorrichtungen 1 getragen wird. Dabei hängt die Garplatte 2 in den Haltevorrichtungen 1 bzw. im Halterahmen, stützt sich auf den Absätzen 1d ab und die Unterseite 2c der Garplatte 2 befindet sich unterhalb der Unterseite 1c der Haltevorrichtung 1.

Fig. 4 zeigt einen Schnitt durch die Garauflagevorrichtung, wobei die Garplatte 2 im Verhältnis zur Haltevorrichtung 1 auf der zweiten Hebestufe angeordnet ist. Um die Garplatte 2 von der ersten Hebestufe (Fig. 3) auf die zweite Hebestufe (Fig. 4) anzuheben, untergreift der Benutzer die Haltevorrichtung 1 und drückt (Pfeil 7) die Schiebevorrichtung 5 an der Aussenseite 5a horizontal nach Innen. Die Schiebevorrichtung 5 wird dabei von der Haltevorrichtung 1 horizontal geführt. Durch die horizontale Verschiebung drückt die Schiebevorrichtung 5 an der Kontaktstelle 8 gegen eine schräge Fläche 2d des Randes 2b der Garplatte 2 und hebt die Garplatte 2 auf eine Rampe 5a der Schiebevorrichtung 5 (Fig. 4). In der zweiten Hebestufe wird die Garplatte 2 über die Unterseite 2c auf der Rampe 5a der Schiebevorrichtung 5 stabil abgestützt, sodass die Garplatte 2 auf der Höhe gehalten wird und nicht nach unten fällt, auch wenn der Benutzer die Schiebevorrichtung 5 los lässt.

Im Weiteren sind die Garplatte 2 und die Haltevorrichtung 1 derart ausgestaltet, dass in der zweiten Hebestufe die Oberseite 2e der Garplatte 2 höchstens auf gleicher Höhe wie die Oberseite 1e der Haltevorrichtung 1 angeordnet ist. Die Garplatte 2 und die Haltevorrichtung 1 grenzen somit an der Kontaktstelle 9 bündig aneinander, oder die Garplatte 2 liegt tiefer als die Haltevorrichtung 1. Dadurch ist eine seitliche Führung der Garplatte 2 sichergestellt und die Gefahr einer Verbrennung an der heissen Garplatte 2 ist geringer.

Die zweite Hebestufe ist beispielsweise vorgesehen, um die Garauflagevorrichtung auf einem Tisch zu platzieren, um das Gargut zu servieren. Bei der zweiten Hebestufe ist die Unterseite 2c der Garplatte 2 oberhalb der Unterseite 1c der Haltevorrichtung 1 angeordnet, sodass die allenfalls heisse Unterseite 2c nicht mit dem Tisch in Berührung kommt und diesen beschädigt. Die Garauflagevorrichtung wird somit alleine über die gering wärmeleitenden Haltevorrichtungen 1 auf dem Tisch abgestützt.

Um die Garplatte 2 im Verhältnis zur Haltevorrichtung 1 mittels des Hebemechanismus abzusenken bzw. um die Garplatte von der zweiten Hebestufe wieder in die erste Hebestufe zu bewegen, zieht der Benutzer durch Untergreifen der Haltevorrichtung 1 die Schiebevorrichtung 5 an einem Haken 5b nach aussen (Pfeil 10), sodass die Rampe 5a unter der Garplatte 2 hervorgezogen wird und die Garplatte 2 nach unten in die erste Hebestufe gleitet.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Garauflagevorrichtung, insbesondere zur Anordnung auf einem Kochfeld oder in einem Gargerät, umfassend eine Garplatte (2), **dadurch gekennzeichnet, dass** die Garauflagevorrichtung mindestens zwei an gegenüberliegenden Seiten der Garplatte (2) angeordnete Haltevorrichtungen (1) aufweist, wobei die mindestens zwei Haltevorrichtungen (1) von der Garplatte (2) trennbar sind.

2. Garauflagevorrichtung nach Anspruch 1, wobei die mindestens zwei Haltevorrichtungen (1) eine Wärmeleitfähigkeit von weniger als 1 W/(m K), insbesondere weniger als 0.5 W/(m K), insbesondere weniger als 0.1 W/(m K), aufweisen.

3. Garauflagevorrichtung nach einem der vorangehenden Ansprüche, wobei die Garplatte (2) zumindest teilweise aus Edelstahl besteht und/oder wobei die mindestens zwei Haltevorrichtungen (1) zumindest teilweise, insbesondere mehrheitlich, aus Holz bestehen.

4. Garauflagevorrichtung nach einem der vorangehenden Ansprüche, wobei die Garauflagevorrichtung und/oder die Garplatte (2) rechteckig ausgestaltet ist bzw. sind.

5. Garauflagevorrichtung nach einem der vorangehenden Ansprüche, wobei sich die mindestens zwei Haltevorrichtungen (1) über die gesamte Länge der gegenüberliegenden Seiten der Garplatte (2) erstrecken und/oder wobei an einer Unterseite (1c) der mindestens zwei Haltevorrichtungen zumindest teilweise ein Rutschschutz, insbesondere Rutschschutzmatten (6), insbesondere Silikonmatten, angeordnet ist.

6. Garauflagevorrichtung nach einem der vorangehenden Ansprüche, wobei die mindestens zwei Haltevorrichtungen (1) mittels mindestens einem Verbindungselement (4) miteinander verbunden sind, und wobei die Garplatte (2) von den mindestens zwei Haltevorrichtungen (1) und vom Verbindungselement (4) trennbar sind,
insbesondere wobei die mindestens zwei Haltevorrichtungen (1) und das mindestens eine Verbindungselement (4) Bestandteil eines die Garplatte (2) umfassenden Halterahmens sind, wobei die Garplatte (2) vom Halterahmen trennbar ist, insbesondere wobei das mindestens eine Verbindungselement (4) teilweise aus demselben Material besteht wie die Garplatte (2).

7. Garauflagevorrichtung nach Anspruch 6, wobei an einer Unterseite des Halterahmens zumindest teilweise ein Rutschschutz, insbesondere Rutschschutzmatten (6), insbesondere Silikonmatten, angeordnet ist.

8. Garauflagevorrichtung nach einem der vorangehenden Ansprüche, wobei die Garauflagevorrichtung einen Hebemechanismus aufweist, der insbesondere an den mindestens zwei Haltevorrichtungen (1) angeordnet ist,
- wobei mittels des Hebemechanismus die Garplatte (2) gegenüber den Haltevorrichtungen (1), insbesondere um mindestens 0.5 cm, insbesondere um mindestens 1 cm, anhebbar ist, und/oder
- wobei der Hebemechanismus derart ausgestaltet ist, dass in einer ersten Hebestufe eine Unterseite (2c) der Garplatte (2) auf gleicher oder tieferer Höhe angeordnet ist wie eine Unterseite (1c) der Haltevorrichtung (1) und in einer zweiten Hebestufe die Unterseite (2c) der Garplatte (2) oberhalb der Unterseite (1c) der Haltevorrichtung (1) angeordnet ist.

9. Garauflagevorrichtung nach Anspruch 8, wobei in der zweiten Hebestufe eine Oberseite (2e) der Garplatte (2) höchstens auf gleicher Höhe wie eine Oberseite (1e) der Haltevorrichtung (1) angeordnet ist.

10. Garauflagevorrichtung nach einem der Ansprüche 8 oder 9, wobei der Hebemechanismus eine Schiebevorrichtung (5) aufweist, welche derart ausgestaltet ist, dass mittels horizontaler Verschiebung der Schiebevorrichtung (5)
- die Garplatte (2) gegenüber den Haltevorrichtungen (1) anhebbar ist und/oder
- zwischen der ersten Hebestufe und der zweiten Hebestufe bewegbar ist.

11. Garauflagevorrichtung nach Anspruch 10, wobei die Schiebevorrichtung (5) in ihrer Schiebebewegung (7) von mindestens einer der mindestens zwei Haltevorrichtungen (1) geführt ist.

12. Garauflagevorrichtung nach einem der vorangehenden Ansprüche, wobei mindestens eine der mindestens zwei Haltevorrichtungen (1) eine Ausnehmung (3) aufweist, derart, dass die Haltevorrichtung (1) in die Ausnehmung (3) hinein untergreifbar ist,
insbesondere wobei die Ausnehmung (3) von einer U-Form (1a, 1b) der Haltevorrichtung (1) umfasst ist.

13. Garauflagevorrichtung nach den Ansprüchen 11 und 12, wobei die Schiebevorrichtung (5) derart angeordnet ist, dass sie bei Untergreifen der Haltevorrichtung (1) betätigbar ist.

14. Garauflagevorrichtung nach einem der vorangehenden Ansprüche, wobei die Garplatte (2) von unten durch die mindestens zwei Haltevorrichtungen (1) abgestützt ist und nach oben von den mindestens zwei Haltevorrichtungen (1), insbesondere ohne Werkzeug, aus den mindestens zwei Haltevorrichtungen (1) entnehmbar ist.

15. Garauflagevorrichtung nach einem der vorangehenden Ansprüche, wobei die Garplatte eine Länge zwischen 33 cm und 53 cm, insbesondere 43 cm, und/oder eine Breite zwischen 20 cm und 36 cm, insbesondere 28 cm, aufweist.
